# FASCICULE DE BREVET EUROPEEN

(11) **EP 1 999 173 B1**
(45) Date de publication et mention de la délivrance du brevet: **17.02.2010**
(21) Numéro de dépôt: 07727395.1
(22) Date de dépôt: 27.03.2007
(51) Int. Cl.: C08G 18/08, C08G 18/70, C09D 5/02

(54) **MELANGE A BASE DE POLYISOCYANATE ET D'UN SOLVANT DE TYPE ACETAL, EMULSION AQUEUSE OBTENUE A PARTIR DE CE MELANGE ET UTILISATION DE CETTE EMULSION POUR LA FABRICATION DE REVETEMENTS ET D'ADHESIFS**
GEMISCH AUF DER BASIS VON POLYISOCYANAT UND EINEM ACETALLÖSUNGSMITTEL, WÄSSRIGE EMULSION AUS DIESEM GEMISCH UND VERWENDUNG DIESER EMULSION ZUR HERSTELLUNG VON BESCHICHTUNGEN UND HAFTMITTELN
MIXTURE BASED ON POLYISOCYANATE AND AN ACETAL SOLVENT, AQUEOUS EMULSION OBTAINED FROM THIS MIXTURE, AND USE OF THIS EMULSION FOR PRODUCING COATINGS AND ADHESIVES

(30) Priorité: 29.03.2006 FR 0602710
(43) Date de publication de la demande: 10.12.2008
(73) Titulaire: Rhodia Opérations, 93306 Aubervilliers (FR)
(72) Inventeur: BOURGEOIS, Damien, F-34830 Clapiers (FR)
(74) Mandataire: Lavé, Stéphanie
(86) Numéro de dépôt international: PCT/EP2007/052922
(87) Numéro de publication internationale: WO 2007/110425

(56) Documents cités:
- WO-A-97/31960
- WO-A-2004/022623
- WO-A-2005/090492
- US-A- 5 830 938

## Description

La présente invention concerne un mélange à base de polyisocyanate et d'un solvant de type acétal, une émulsion aqueuse obtenue à partir de ce mélange et l'utilisation de cette émulsion pour la fabrication de revêtements et d'adhésifs.

On sait que l'on utilise largement dans le domaine des peintures et des vernis des diisocyanates, notamment les alcoylènes diisocyanates et leurs dérivés de type biuret ou leurs trimères.

Jusqu'à une date récente, ces produits étaient généralement utilisés en solution dans des solvants organiques. Or l'utilisation de solvants organiques est de plus en plus souvent critiquée car ces solvants, ou du moins certains d'être eux, sont réputés toxiques ou chronotoxiques. C'est la raison pour laquelle on essaye de développer de plus en plus des techniques qui ne mettent en oeuvre que peu de solvant, voire qui soient sans solvant. C'est dans ce but qu'il a été mis au point des compositions à base de polyisocyanate à la fois facilement émulsionnables et facilement utilisables en émulsion dans l'eau. L'eau sert dans ce cas de véhicule aux composants de la formulation et permet de réduire la teneur en solvants organiques dans celle-ci. De plus, de telles compositions permettent le rinçage à l'eau du matériel utilisé pour leur application.

Un des problèmes liés à ce type de techniques est d'obtenir des émulsions qui présentent une bonne stabilité, c'est-à-dire en fait des émulsions dont la taille des globules en suspension dans la phase liquide soit la plus fine possible. Par ailleurs, il est bien entendu demandé que les revêtements obtenus en utilisant ces émulsions présentent au moins globalement des propriétés comparables à celles des revêtements obtenus à partir des compositions en solvant organique. Ce peut être le cas notamment en ce qui concerne l'aspect et plus particulièrement la brillance.

L'objet de l'invention est donc la mise au point d'un produit susceptible de répondre à ces problèmes.

Dans ce but, l'invention concerne un mélange à base de polyisocyanate, qui est caractérisé en ce qu'il comprend :
- une composition polyisocyanate émulsifiable dans l'eau;
- au moins un solvant de formule (1) 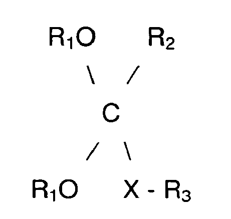
dans laquelle
R₁ représente un groupe alkyle en C₁-C₄, linéaire ou ramifié, les deux radicaux
R₁ pouvant être identiques ou différents et pouvant aussi être reliés;
R₂ représente H ou un groupe alkyle en C₁-C₄, linéaire ou ramifié;
X représente un radical alkyle divalent, linéaire ou ramifié, comprenant de 1 à 6 atomes de carbone, X pouvant représenter aussi une simple liaison covalente;
R₃ représente H, C(OR₁)₂R₂, C(O)OR₁, OC(O)R₂, OC(O)OR₁.

L'invention concerne aussi une émulsion aqueuse qui est caractérisée en ce qu'elle est obtenue par mise en émulsion dans l'eau du mélange tel que décrit ci-dessus, mélange comprenant une composition polyisocyanate émulsifiable dans l'eau et au moins un solvant de formule (1) précitée, cette émulsion comprenant en outre au moins un composé porteur d'au moins une fonction à hydrogène mobile choisie parmi les fonctions hydroxyles primaires
ou secondaires, phénols, amines primaires, et/ou secondaires, carboxyliques et fonction thiol ou un composé contenant des fonctions précurseurs susceptibles de libérer des fonctions hydroxyles.

US 5 830 938 décrit des mélanges de polyisocyanates comprenant une composition polyisocyanate emulsifiable dans l'eau et Ethyl-éthoxy-proprionate comme solvant.

D'autres caractéristiques, détails et avantages de l'invention apparaîtront encore plus complètement à la lecture de la description qui va suivre, ainsi que des divers exemples concrets mais non limitatifs destinés à l'illustrer.

Comme indiqué plus haut, le mélange à base de polyisocyanate de l'invention comprend deux éléments essentiels : une composition polyisocyanate émulsifiable dans l'eau et un solvant spécifique. Ces deux éléments vont être décrits plus précisément ci-dessous.

Par « composition polyisocyanate émulsifiable dans l'eau », on entend une composition à base d'un ou de plusieurs polyisocyanates et qui, quand elle est mise dans l'eau, est susceptible de donner une émulsion c'est-à-dire un milieu liquide constitué de particules (globules ou gouttelettes) de liquide dispersées dans une autre phase liquide.

De préférence, la composition est du type autoémulsionable, c'est à dire qu'il s'agit d'une composition capable de former, en présence d'un milieu liquide dans laquelle ladite composition est immiscible, une émulsion par un mécanisme spontané. Dans le mécanisme d'émulsification spontanée, l'énergie nécessaire pour former une émulsion concerne uniquement l'énergie requise pour redistribuer la matière à émulsionner dans le mélange : ainsi il n'y a pas besoin d'énergie extérieure, essentiellement d'énergie d'agitation, pour créer l'émulsion. En d'autres termes, une simple agitation manuelle suffit à assurer une répartition macroscopiquement uniforme de la phase discontinue et à obtenir ainsi l'émulsion.

Les compositions polyisocyanates émulsifiables dans l'eau sont des produits connus et qui ont été décrits. On donne ci-dessous à titre d'illustration une description non exhaustive de ce type de produits.

Les polyisocyanates préférés sont choisis parmi les produits d'homo- ou d'hétéro-condensation d'alcoylène diisocyanate, comprenant notamment des produits du type "biuret" et du type "trimères", voire "prépolymères" à fonction isocyanate, comportant notamment des fonctions urée, uréthane, allophanate, ester, amide, acylurée, isocyanurate, oxadiazinetrione, immino-dimère, immino-trimère (imminotriazadione), immino-oxadiazinedione (encore appelé trimère asymétrique), diazétidinedione (encore appelé dimère), et parmi les mélanges en contenant.

Les composés polyisocyanates peuvent également comporter des fonctions carbamates vraies (R-O-C(=O)-NH₂) ou des fonctions époxy ou des fonctions carbonates de préférence cycliques.

Il peut s'agir, par exemple, des polyisocyanates commercialisés par la Société Rhodia sous la dénomination "Tolonate^{®}".

De manière générale, les polyisocyanates préférés sont les produits d'homo- ou d'hétéro-condensation des monomères isocyanates aliphatiques, (cyclo- ou aryl-) aliphatiques suivants :
- 1,6-hexaméthylène di-isocyanate (HDI),
- 1,12-dodécane di-isocyanate,
- cyclobutane-1,3-di-isocyanate,
- cyclohexane-1,3 et/ou 1,4-di-isocyanate,
- 1-isocyanato-3,3,5-triméthyl-5-diisocyanatométhylcyclohexane (isophorone di-isocyanate, IPDI),
- les isocyanatométhyloctylènedi-isocyanate (TTI), notamment le 4-isocyanatométhyl-1,8-octylènedi-isocyanate,
- 2,4 et/ou 2,6-hexahydrotoluylène di-isocyanate (H₆TDI),
- hexahydro-1,3 et/ou 1,4-phénylène di-isocyanate,
- perhydro 2,4' et/ou 4,4'-diphénylméthane di-isocyanate (H₁₂MDI), et en général les précurseurs aromatiques aminés ou les carbamates perhydrogénés,
- les bis-isocyanatométhylcyclohexane (notamment 1,3 et 1,4) (BIC),
- les bis-isocyanatométhylnorbornane (NBDI),
- 2-méthylpentaméthylène di-isocyanate (MPDI),
- les tétraméthylxylylène di-isocyanate (TMXDI), et
- le lysine di-isocyanate ainsi que les esters de la lysine di- ou tri-isocyanate (LDI ou LTI).

Les produits d'homo-condensation sont les produits issus de la condensation d'un des monomères isocyanates, mentionnés dans la liste ci-dessus, avec lui-même. Les produits d'hétéro-condensation sont les produits issus de la condensation de deux ou plusieurs des monomères mentionnés dans la liste ci-dessus, entre eux et/ou éventuellement avec un ou plusieurs composés à hydrogène mobile, tels que par exemple un alcool, un diol, une amine primaire ou secondaire et autres composés analogues.

Les polyisocyanates compris dans la composition de la présente invention peuvent également être des dérivés polyisocyanates issus d'isocyanates aromatiques utilisés seuls ou en mélange avec des composés aliphatiques.

À titre d'exemples d'isocyanates aromatiques, on peut citer de manière non limitative :
- le 2,4- et/ou le 2,6-toluylène di-isocyanate,
- le diphénylméthane-2,4' et/ou 4,4'-di-isocyanate (MDI),
- le 1,3- et/ou le1,4-phénylène di-isocyanate,
- le triphénylméthane-4,4',4"-triisocyanate, et
- les oligomères du MDI, ou TDI.

Des mélanges de ces polyisocyanates (cyclo)aliphatiques et/ou aromatiques peuvent aussi être utilisés.

Selon un mode de réalisation particulier de l'invention, la composition comprend un polyisocyanate qui est le produit de l'homocondensation des isocyanates choisis parmi le HDI et l'IPDI ou qui provient d'un mélange de ces produits d'homocondensation.

Pour que la composition polyisocyanate soit émulsifiable au sens donné plus haut, elle comporte en outre un additif permettant de la mettre en émulsion ou de la rendre dispersable ou hydrosoluble. Cet additif est du type tensioactif et il comporte dans sa structure au moins une fonction hydrophile. On utilisera dans la suite de la description le terme d'additif hydrophile.

Plusieurs variantes peuvent être alors envisagées.

Dans le cas d'une première variante, la composition polyisocyanate contient un additif hydrophile du type non réactif, c'est-à-dire que cet additif est présent en mélange avec la composition sans qu'il y ait eu une réaction entre cet additif et le polyisocyanate de la composition. Comme additif de ce type, on peut mentionner ceux décrits dans les documents WO 97/31960 et FR 2855768-A1 à l'enseignement desquels on pourra se reporter. Ces additifs présentent une fonction anionique et avantageusement un fragment de chaîne polyéthylène glycol d'au moins une, de préférence d'au moins 5 unités éthylènyloxyles.

On peut mentionner plus particulièrement parmi ces additifs ceux de formule (2) ci-dessous : 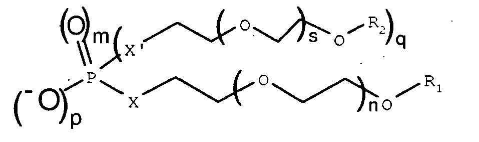 avec lorsque q est égal à zéro ceux de formule (3) : 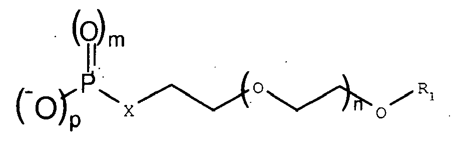 et où p représente zéro ou un entier entre 1 et 2 (intervalles fermés c'est à dire comprenant les bornes);
où m représente zéro ou un entier entre 1 et 2 (intervalles fermés c'est à dire comprenant les bornes);
où la somme p + m + q est au plus égale à trois;
où la somme 1 + p + 2m + q est égale à trois ou à cinq;
où X et X', semblables ou différents, représentent un bras comportant au plus deux chaînons carbonés;
où n et s, semblables ou différents, représentent un entier choisi entre 5 et 30 avantageusement entre 5 et 25, de préférence entre 9 et 20 (intervalles fermés c'est à dire comprenant les bornes);
où R₁ et R₂ des formules (2) et (3), semblables ou différents, représentent un radical hydrocarboné, avantageusement choisi parmi les aryles et les alcoyles éventuellement substitués notamment par atome d'halogène notamment fluor.

Dans le cas d'une seconde variante, la composition polyisocyanate contient un additif hydrophile du type réactif, c'est-à-dire que cet additif est présent dans la composition mais en étant greffé sur le polyisocyanate de la composition. Comme additifs greffables sur les polyisocyanates, on peut citer les additifs hydrophiles mentionnés dans le brevet US 4663377 à l'enseignement duquel on pourra se référer.

Comme autres additifs greffables on peut citer aussi ceux du type non ioniques ou ioniques (cationiques ou anioniques) tels que ceux mentionnés dans EP-A-0703255, additifs comprenant des groupes -SO₃H ou -SO₃ .

Enfin, on peut envisager une troisième variante qui est la combinaison des deux précédentes, c'est-à-dire que la composition contient à la fois un additif non réactif et un additif greffé.

Le rapport massique entre la composition polyisocyanate et l'additif hydrophile est le plus souvent au plus égal à environ 33%, avantageusement au plus égal à environ 20%, de préférence à environ 10%. Ce rapport massique est avantageusement supérieur à 1 %, de préférence à 2%.

L'autre élément essentiel du mélange à base de polyisocyanate de l'invention est le solvant. Celui-ci est du type acétal et répond à la formule (1) donnée plus haut.

Des modes de réalisation plus particuliers quant à la nature du solvant vont être décrits ci-après, toujours en référence à la formule (1) donnée plus haut.

On notera tout d'abord que les radicaux R₁ peuvent éventuellement être reliés de manière à former des ponts type dioxolane ou dioxanne.

X peut être un radical alkyle de 1 à 6 atomes de carbone, de préférence de 1 à 4 atomes de carbone. Le radical alkyle peut éventuellement être substitué de manière à comprendre des groupes cétone, esters ou éther par exemple.

Le solvant peut contenir au plus 20 atomes de carbone et il peut présenter un point de fusion d'au plus 0°C et un point d'ébullition d'au plus 350 °C.

Le solvant peut répondre plus particulièrement à la formule (1) dans laquelle R₂ représente H ou CH₃, X est une liaison covalente et R₃ représente CH₃, -(CH)(OR₁)₂, -C(=O)(OR₁).

Selon un mode de réalisation particulier le solvant peut être choisi plus particulièrement parmi ceux de formule (1) dans laquelle les groupes R₁ peuvent être des radicaux méthyle ou éthyle, X est une liaison covalente et R₂ l'hydrogène. Dans le cas de ce mode de réalisation, le solvant peut répondre plus particulièrement à la formule (1) dans laquelle R₂ représente H, R₃ représente -(CH)(OR₁)₂ et R₁ représente le radical éthyle, le solvant étant alors le 1,1,2,2-tétraéthoxy éthane. Dans le cas de ce même mode de réalisation, le solvant peut aussi répondre plus particulièrement à la formule (1) dans laquelle R₂ représente H, R₃ représente -C(=O)(OR₁) et R₁ représente le radical éthyle, le solvant étant alors le 2,2-diéthoxy acétate d'éthyle. Le solvant peut aussi répondre à la formule (1) dans laquelle R₂ représente H, R₃ représente -C(=O)(OR₁) et R₁ représente le radical méthyle, le solvant étant alors le 2,2-diméthoxy acétate de méthyle.

Selon un mode de réalisation préférentiel, le solvant répond à la formule (1) dans laquelle R₂ représente H, R₃ représente -(CH)(OR₁)₂ et R₁ représente le radical méthyle, le solvant étant alors le 1,1,2,2-tétraméthoxy éthane.

Ce dernier solvant constitue une variante avantageuse car le 1,1,2,2-tétraméthoxy éthane est un produit de faible odeur, non inflammable et non toxique. Il est aussi miscible à l'eau en toutes proportions.

Les solvants utilisés dans le cadre de l'invention et qui viennent d'être décrits sont des produits connus. On pourra se référer à l'enseignement de FR-A-2855171 notamment.

Bien entendu, l'invention couvre les cas où le mélange contient plusieurs solvants. Ces solvants peuvent être un mélange de solvants selon la formule (1) ci-dessus. Ce peut être aussi une combinaison d'un solvant ou d'un mélange de solvants selon la formule (1) avec un ou plusieurs autres solvants connus et utilisés pour ce type de mélanges, par exemple l'acétate de butyle, l'acétate de méthoxypropyle, le diacétate de propylène glycol, l'acétate de butyl éthylène glycol, le diméthyl dipropylène glycol, les esters d'acide carbonique, comme le carbonate de propylène, les lactones comme l' - caprolactone, l'éthoxyproprionate d'éthyle, la N-éthylpyrolidone. On choisit toutefois de préférence ces solvants parmi ceux qui sont non inflammables et non toxiques.

On utilise de préférence un solvant de point d'ébulition compris entre 50 °C et 350 °C, plus particulièrement entre 100 °C et 300 °C.

Les solvants utilisés dans les mélange de l'invention permettent de conférer à ceux-ci une viscosité convenable en fonction du type d'application recherchée.

La proportion respective de composition polyisocyanate et de solvant dans le mélange de l'invention est généralement comprise entre 5% et 60%, plus particulièrement entre 5% et 50% et encore plus particulièrement entre 5% et 30% en masse de solvant par rapport à l'ensemble du mélange.

On notera que dans le cas d'un mélange d'un ou de plusieurs solvants selon l'invention avec un ou des solvants connus mentionnés plus haut, la proportion en solvant selon l'invention est de préférence d'au moins 50% en masse par rapport à l'ensemble des solvants, la proportion globale en l'ensemble des solvants restant alors dans la gamme donnée au paragraphe précédent.

L'invention concerne aussi en tant que produit nouveau un mélange qui peut être considéré comme un produit précurseur du mélange qui vient d'être décrit plus haut. Dans la suite de la description ce produit sera désigné par les termes de « mélange précurseur » pour le distinguer du premier mélange décrit précédemment mais on doit comprendre que ce mélange précurseur doit être considéré en tant que tel et que l'on ne sortirait pas du cadre de la présente invention en l'utilisant dans un autre but que celui de préparer le premier mélange de l'invention.

Ce mélange précurseur est caractérisé en ce qu'il comprend une composition polyisocyanate et au moins un solvant de formule (1) précitée. Tout ce qui a été décrit précédemment sur le solvant et sur les polyisocyanates de la composition s'applique ici pour ce qui concerne le mélange précurseur. La différence avec le mélange décrit plus haut est que, dans le mélange précurseur, la composition polyisocyanate ne comporte pas d'additif hydrophile.

On passe du mélange précurseur de l'invention au mélange proprement dit par addition au premier de l'additif hydrophile. Cette addition peut se faire par simple mélange de l'additif à la composition polyisocyanate en solution dans le solvant. Dans le cas d'un additif hydrophile de type réactif, le mélange peut se faire plus particulièrement à une température comprise par exemple entre 50 °C et 130 °C, en fonction du type de l'additif.

Une autre possibilité pour obtenir à partir du mélange précurseur le premier mélange selon l'invention est d'ajouter au mélange précurseur un polyisocyanate émulsifiable. Dans ce cas, il n'est pas nécessaire de rajouter au mélange précurseur un additif hydrophile.

Le mélange de l'invention peut être mélangé à des dispersions aqueuses de polyuréthane. Des dispersions aqueuses convenables dans le cadre de l'invention sont connues en soi et sont décrites, par exemple, dans les documents US3479310, GB1076688, US4108814, US4092286, DE2651505, US4190566, DE2732131, DE 2811148, ou dans les documents US2006240264, US2005288431, US2005209425, US7012115 ou EP986592.

Comme on l'a vu plus haut, l'invention concerne aussi une émulsion aqueuse obtenue à partir du mélange composition polyisocyanate émulsifiable dans l'eau /solvant décrit précédemment.

La phase aqueuse de l'émulsion sert de vecteur du ou des co-réactifs polycondensables avec le ou les polyisocyanate(s) de la composition polyisocyanate, c'est-à-dire le ou les composé(s) à hydrogène mobile mentionné(s) précédemment.

Les composés à hydrogène mobile utilisables sont bien connus. De préférence, ces composés sont choisis parmi les polyols qui peuvent être utilisés seuls ou en mélange ou encore les composés contenant des fonctions précurseurs susceptibles de libérer des fonctions hydroxyles. Ce peut être avantageusement des polymères acryliques, polyesters, polyuréthannes ou des hybrides de ces polymères. On peut mentionner aussi les polyéthers.

Comme fonctions précurseurs susceptibles de libérer des fonctions hydroxyles, on peut citer par exemple les fonctions époxy, carbonates ou dioxolane. Ces fonctions précurseurs libèrent les fonctions hydroxy par réaction avec un nucléophile adéquat comme une amine ou de l'eau, éventuellement en présence d'un catalyseur qui peut être un composé acide
ou un acide de Lewis dans une quantité en poids qui peut être comprise par exemple entre 50 et 5000 ppm, plus particulièrement entre 100 et 500 ppm, quantité exprimée en poids de catalyseur par rapport à l'extrait sec de la composition polyisocyanate et du composé porteur d'au moins une fonction à hydrogène mobile.

L'émulsion peut en outre contenir des additifs organiques ou inorganiques, comme un pigment, un additif de rhéologie, un épaississant, des agents de surface, des catalyseurs, en fonction des propriétés recherchées.

L'émulsion ainsi obtenue présente pour la partie polyisocyanate des particules (globules) dont le d50 est d'au plus 200 nm, plus particulièrement d'au plus 160 nm et encore plus particulièrement d'au plus 130 nm.

L'invention concerne aussi un procédé de fabrication d'un revêtement sur un substrat dans lequel on utilise l'émulsion décrite ci-dessus. Par revêtement on entend tout type de couche appliquée sur un substrat de nature à protéger et/ou à décorer celui-ci, par exemple une peinture ou un vernis.

Le procédé est mis en oeuvre en appliquant l'émulsion sur le substrat par toute technique connue. Le substrat est un matériau qui peut être choisi parmi le bois, les métaux, les ciments, les matériaux plastiques, les textiles, le cuir.

Dans le cas d'un substrat métallique, le métal peut être par exemple l'aluminium ou un acier.

On notera que le procédé s'applique à des substrats pouvant comporter plusieurs revêtement superposés et, dans ce cas, le produit de l'invention peut être utilisé pour la préparation de l'un quelconque de ces revêtements. Toutefois, le produit de l'invention peut être avantageusement utilisé pour un revêtement de finition, c'est le cas notamment des substrats en cuir.

Une fois l'émulsion déposée, la réaction entre la composition polyisocyanate et le composé porteur d'au moins une fonction à hydrogène mobile peut se faire à température ambiante ou à chaud à une température qui peut être comprise entre 30 °C et 300 °C, de préférence entre 40 °C et 250 °C et encore plus préférentiellement entre 50°C et 150°C. La température et le temps de réticulation sont adaptés en fonction du substrat. Dans le cas de substrats sensibles à la température on utilisera plus particulièrement des catalyseurs de réticulation.

L'émulsion de l'invention peut aussi être utilisée comme adhésif. Dans un tel cas, on forme un revêtement comme décrit plus haut, ce revêtement ayant ici des propriétés d'adhésif, sur un substrat destiné à être collé avec un autre élément. Le substrat peut être tout particulièrement un substrat en bois.

Des exemples vont maintenant être donnés.

Dans ces exemples les abréviations utilisées ont les significations indiquées ci-dessous.
TME : 1,1,2,2-tetraméthoxyéthane
HDI : 1,6-hexaméthylènediisocyanate
IPDI : isophorone di-isocyanate
D₅₀ : taille médiane des particules

Les matières premières suivantes ont été utilisées :
TOLONATE^{®} HDT : composé polyisocyanate à base HDI à 100% d'extrait sec (E.S.), commercialisé par la société RHODIA, présentant 22% environ de fonctions NCO pour 100g de matière, et de viscosité d'environ 2400 mPa.s à 25°C.
RHODOCOAT^{®} XEZ-M 502 : composé polyisocyanate hydrophile à base HDI à 100% d'extrait sec (E.S.), commercialisé par la société RHODIA, présentant 18,4% environ de fonctions NCO pour 100g de matière, et de viscosité environ 3600 mPa.s à 25°C.
Emulsifiants ou additifs hydrophiles : il s'agit d'esters phosphates de polyoxydes d'éthylène à chaînes grasses alkyles (en C₁₃). Ils diffèrent par le ratio monoester/diester. Les caractéristiques des émulsifiants sont données dans le tableau 1 ci-dessous. Ces émulsifiants sont par ailleurs décrits dans l'exemple 1 de FR-A-2870253.

**Tableau 1**

| Référence | Nombre d'unités d'oxyde d'alkylène | Taux de diester |
|---|---|---|
| TA.X | 9 | 30% |
| TA.Y | 9 | 10% |

Les exemples font aussi référence à des tests décrits ci-dessous

Brillance : cette mesure est caractéristique de l'homogénéité et de l'aspect des films. Elle est faite après 7 jours de séchage à l'aide d'un brillancemètre Erichsen modèle S40 selon l'angle spécifié.

Dureté Persoz : les mesures de dureté Persoz se font dans une salle conditionnée à 23±3°C et une humidité relative de 50±10%. L'appareil utilisé est un pendule d'essai type 300 de chez Erichsen avec butée de lancement et comptage automatique. Le principe du pendule de dureté se base sur les oscillations d'un pendule placé sur le film. Le nombre d'oscillations est d'autant plus grand que le vernis est dur et sec. La mesure de reprise de dureté est le nombre d'oscillations que met le pendule à s'amortir puis s'arrêter. La durée d'une oscillation est de une seconde. L'essai est fini lorsque l'amortisseur des oscillations atteint une amplitude de 4°.

### EXEMPLE 1 .

Cet exemple illustre la capacité d'un mélange selon l'invention à donner une émulsion dans l'eau dont les tailles des particules sont fines.

Dans un bécher de 100ml équipé d'un système d'agitation mécanique, on introduit 45ml d'eau puis 5g d'une formulation de polyisocyanate émulsionnable. On agite 5 min à 400 tours/min. L'émulsion ainsi obtenue est analysée avec un granulomètre à diffraction laser type Malvern Mastersizer 2000.

On forme ainsi les mélanges suivants.

Mélange A selon l'invention : on mélange 70g de Rhodocoat XEZ-M 502 à 30g de TME.

Mélange B selon l'invention : on mélange 50g de Rhodocoat XEZ-M 502 à 50g de TME.

Mélange C (comparatif) : on mélange 70g de Rhodocoat XEZ-M 502 à 30g de Shellsol A.

Mélange D (comparatif) : on mélange 70g de Rhodocoat XEZ-M 502 à 30g de Rhodiasolv DIB (ester de diisobutyle).

Mélange E (comparatif) : on mélange 70g de Rhodocoat XEZ-M 502 à 30g de N-méthylpyrrolidinone (NMP).

On donne dans les tableaux 2 et 3 ci-dessous, les caractéristiques des émulsions obtenues à partir de ces mélanges.

**Tableau 2**

| Mélange | Taux de TME | Viscosité (mPa.s) | D₅₀ (nm) |
|---|---|---|---|
| Rhodocoat XEZ-M 502 seul | 0% | 3600 | 92 |
| A | 30% | 120 | 128 |
| B | 50% | 30 | 159 |

**Tableau 3**

| | Taux de solvant | D₅₀ (nm) |
|---|---|---|
| C | 30% | 2800 |
| D | 30% | 7300 |
| E | 30% | 158 |

L'utilisation de TME permet de diminuer fortement la viscosité de la formulation de polyisocyanate auto-émulsionnable tout en gardant une taille médiane des particules très faible. A taux de solvant identique, l'émulsion selon l'invention présente une taille de particules plus faible que dans le cas des émulsions de l'art antérieur.

### EXEMPLE 2

Cet exemple illustre l'utilisation d'une émulsion selon l'invention dans une formulation de laques pour sols béton.

### Préparation de la peinture

On prépare une peinture type polyuréthanne bi-composant pour sols béton de la manière suivante:

### Partie A :

On mélange successivement une première série de produits suivants :

| Produit | Quantité |
|---|---|
| Halwedrol FV 7425/40w (polyol) (DSM) | 31,75g |
| Coadis 123K (agent mouillant) (Coatex) | 0,70g |
| Byk 011 (antimousse) (Byk chimie) | 1,50g |
| Byk 341 (agent de surface) (Byk chimie) | 0,40g |
| Kronos 2310 (pigment) (Kronos) | 23g |

On disperse par ailleurs dans un broyeur à billes une seconde série de produits suivants :

| Produit | Quantité |
|---|---|
| Halwedrol FV 7425/40w | 40,6g |
| Byk 011 | 0,50g |
| Byk 346 (Byk chimie) | 0,60g |
| Byk 341 | 0,30g |
| Coapur 3025 (épaississant) (Coatex) | 0,25g |

Les première et second séries de produits (100g au total) sont mélangées sous forte agitation pour donner la partie A.

### Partie B :

On mélange 80g de Rhodocoat XEZ-M 502 et 20g de TME.

### Réalisation du revêtement

On introduit dans 30g de partie A 6,7g de partie B. La préparation ainsi obtenue est mélangée avec une spatule jusqu'à homogénéisation complète (2 min). On l'applique ensuite sur un support en verre plan avec une épaisseur de 200 µm humide, et on laisse sécher 7 jours en atmosphère contrôlée à 23 °C et 50% d'humidité relative. On obtient alors un revêtement qui possède les caractéristiques suivantes :
- Brillance à 60 ° : 77
- Dureté (Persoz) : 93
- Epaisseur : 52 µm

### EXEMPLE 3

Cet exemple illustre l'utilisation d'une émulsion selon l'invention dans une formulation de laques mates pour sols béton.

### Préparation de la peinture

On prépare une peinture type polyuréthanne bi-composant pour sols béton de la manière suivante:

### Partie A :

On mélange successivement une première série de produits suivants :

| Produits | Quantité |
|---|---|
| Halwedrol FV 7541/45w (polyol) (DSM) | 30,0g |
| Texanol (agent de coalescence) (Eastman) | 0,2g |
| Surfynol 104^{E} (agent de surface) (Air products) | 1,0g |
| Tego Airex 902w (Tego chimie) | 0,8g |
| Coatex BR3 (Coatex) | 0,5g |
| Kronos 2310 (Kronos) | 20,0g |
| Blanc Fixe Micro (Sachtleben) | 3,0g |

On disperse par ailleurs dans un broyeur à billes une seconde série de produits suivants :

| Produits | Quantité |
|---|---|
| Halwedrol FV 7541/45w DSM | 38,4g |
| Surfynol 104^{E} Air products | 0,8g |
| Byk 346Byk chimie | 0,5g |
| Byk 341 Byk chimie | 0,5g |
| eau | 4,0g |
| Coapur 3025 Coatex | 0,3g |

Les première et second séries de produits (100g au total) sont mélangées sous forte agitation pour donner la partie A.

### Partie B :

On mélange 80 g de Rhodocoat XEZ-M 502 et 20g de TME.

### Réalisation du revêtement

On introduit dans 100 g de partie A 15,9 g de partie B. La préparation ainsi obtenue est mélangée avec une spatule jusqu'à homogénéisation complète (2 min); elle reste relativement fluide. On l'applique ensuite sur un support en verre plan avec une épaisseur de 200 µm humide, et on laisse sécher 7 jours en atmosphère contrôlée à 23 °C et 50% d'humidité relative. On obtient alors un revêtement qui possède les caractéristiques suivantes :
- Brillance à 60 ° : 14
- Dureté (Persoz) : 154

### EXEMPLE 4 (COMPARATIF)

On prépare une peinture type polyuréthanne bi-composant pour sols béton avec la partie A décrite à l'exemple 3, et la partie B suivante :

### Partie B :

On mélange 80g de Rhodocoat XEZ-M 502 et 20g de Rhodiasolv RPDE (diester méthylique d'un mélange d'acides carboxyliques).

### Réalisation du revêtement :

On introduit dans 100g de partie A 15,9g de partie B. La préparation ainsi obtenue est mélangée avec une spatule jusqu'à homogénéisation complète (2 min). La préparation devient pâteuse. On l'applique ensuite sur un support en verre plan avec une épaisseur de 200µm humide, et on laisse sécher 7 jours en atmosphère contrôlée à 23°C et 50% d'humidité relative. On obtient un revêtement présentant les caractéristiques suivantes :

**Tableau 4**

| Brillance à 60° | Dureté (Persoz) |
|---|---|
| 11 | 120 |

L'utilisation de TME permet d'obtenir à la fois une préparation plus fluide après mélange des parties A et B, ce qui est important pour l'appliquer avec facilité, et des revêtements de dureté sensiblement supérieure, point clef pour la résistance mécanique des peintures pour sols.

### EXEMPLE 5

Cet exemple concerne la préparation d'un mélange précurseur selon l'invention.

On prépare un trimère d'IPDI selon la demande de brevet FR-A-2808528. Après séparation par distillation de l'IPDI non réagi, on obtient un liquide visqueux, qui prend en masse lors du refroidissement à 25°C. Le solide ainsi obtenu est broyé finement.

Dans un réacteur de 6 I, on introduit 1,3 kg de TME. On chauffe à 100 °C sous agitation mécanique, et on ajoute par petites portions 3,1 kg du solide obtenu précédemment. On mélange ensuite 2h, jusqu'à complète dissolution du solide. On obtient un liquidé incolore, limpide et visqueux, présentant les caractéristiques suivantes :
- Extrait sec : 70%
- Viscosité : 13500 mPa.s
- Titre NCO : 11,5%

### EXEMPLE 6

Cet exemple concerne la préparation d'un mélange selon l'invention comprenant une formulation de polyisocyanate émulsifiable.

On introduit successivement dans un flacon en verre de 60mL 11,2g de la formulation de trimère d'IPDI préparée à l'exemple 5, 15,8g de Tolonate HDT, 3g d'un mélange des émulsifiants TA.X et TA.Y précités neutralisé par de la diméthylcyclohexylamine (DMCHA), et 2g de TME. On agite le flacon sur un mélangeur horizontal type roule pot pendant 24h. On obtient un liquide homogène et incolore.

### EXEMPLE 7

Cet exemple décrit l'utilisation d'un mélange de l'invention pour une formulation de laque brillante pour sols.

On utilise la partie A décrite à l'exemple 2 et le mélange durcisseur décrit à l'exemple 6.

Pour 30g de partie A, on ajoute 6,5g de durcisseur. Le mélange est homogénéisé à l'aide d'une spatule en 5 min. On l'applique ensuite sur un support en verre plan avec une épaisseur de 200µm humide, et on laisse sécher 7 jours en atmosphère contrôlée à 23 °C et 50% d'humidité relative.

On obtient les résultats suivants :

| | |
|---|---|
| Partie A seule : | brillance à 20° : 61 |
| Peinture complète : | brillance à 20 ° : 77 |
| | Dureté : 203 |

### EXEMPLES 8 à 20

Ces exemples décrivent l'utilisation d'un mélange de l'invention dans une formulation pour traitement du cuir.

### EXEMPLES 8 à 17

Le cuir utilisé est un cuir de vachette pleine fleur noir, souple, destiné principalement au secteur de l'automobile et de l'ameublement.

Les essais sont réalisés sur des échantillons de cuir préparés de la façon suivante :
• Application d'un fond pigmenté noir selon la formule suivante (couche de fond n°1 ) :

| | | |
|---|---|---|
| Bayderm 51 UD (Lanxess) | 160 g | Dispersion polyurethane |
| Bayderm DLV (Lanxess) | 120 g | Dispersion polyurethane |
| Primal SB 150 (Rohm & Haas) | 130 g | Liant acrylique |
| Pigment Lepton Noir (BASF) | 100 g | pigment |
| Euderm mat SN 01 (Lanxess) | 50 g | Agent mattant |
| Eau | 440 g | |
| Total | 1000 g | |

• Séchage
• Satinage sous presse (plaque lisse)
• Egalisage par seconde application de la formule précédente
• Séchage
• Application de la fixation aqueuse contenant le mélange de l'invention, par pulvérisation
• Séchage / tunnel infra rouge 80°C
• Satinage /grainage final

Les fixations aqueuses réalisées à partir de produit commerciaux sont les suivantes :
Fixation M 1

| | | |
|---|---|---|
| Aqualen 2004 (Clariant) | 250 g | Dispersion polyurethane |
| Aqualen 2007 (Clariant) | 250 g | Dispersion polyurethane |
| Aqualen D2015 (Clariant) | 150 g | Dispersion polyurethane |
| Eau | 350 g | |
| Total | 1000 g | |

Viscosité coupe Ford n °4 = 19 s
Extrait sec = 15%
Fixation M2

| | | |
|---|---|---|
| Bayderm finish 85 UD (Lanxess) | 350 g | Dispersion polyurethane |
| Aquaderm matt STN (Lanxess) | 350 g | Dispersion polyurethane |
| Acrysol RM 1020 (Lanxess) | 25 g | Epaississant |
| Eau | 275 g | |
| Total | 1000 g | |

Viscosité coupe Ford n °4 = 18 s
Extrait sec = 17%
Fixation M3

| | | |
|---|---|---|
| Astacin Novomatt GG (BASF) | 300 g | Dispersion polyurethane |
| Astacin mat HS (BASF) | 300 g | Dispersion polyurethane |
| Acrysol RM 1020 (Lanxess) | 15g | Epaississant |
| Eau | 385 g | |
| Total | 1000 g | |

Viscosité coupe Ford n °4 = 19 s
Extrait sec = 17%

Le réticulant utilisé est un mélange de Rhodocoat® X EZ-M 502 avec le TME d'un extrait sec de 80%_{.} La quantité de réticulant est choisie de telle manière que la proportion de Rhodocoat® X EZ-M 502 vis-à-vis de l'extrait sec de la fixation soit de 10, 20, 30 ou de 40 %.

| **Exemple** | **Proportion de réticulant par rapport à l'extrait sec de la fixation (%)** | **Nature de la fixation** | **Quantité de réticulant (g)** |
|---|---|---|---|
| 8 | 40 | M1 | 75 |
| 9 | 30 | M1 | 56,25 |
| 10 | 40 | M2 | 85 |
| 11 | 30 | M2 | 63,75 |
| 12 | 20 | M2 | 42,5 |
| 13 | 10 | M2 | 21,25 |
| 14 | 40 | M3 | 85 |
| 15 | 30 | M3 | 63,75 |
| 16 | 20 | M3 | 42,5 |
| 17 | 10 | M3 | 21,25 |

### Tenue aux frottements humide

Le test est réalisé à l'aide d'une machine type Veslic qui consiste à réaliser des frottements translatifs au moyen d'un feutre mouillé sous une charge de 1000 g pendant 200 cycles. A la fin du test, une note est attribuée en fonction de l'état final de la surface frottée et de l'aspect du feutre. Cette note va de 1 (très mauvaise tenue) à 5 (très bonne tenue)

| **Exemple** | **Tenue aux frottements humides** |
|---|---|
| 8 | 3 |
| 9 | 3 |
| 10 | 5 |
| 11 | 4 |
| 12 | 3-4 |
| 13 | 3 |
| 14 | 5 |
| 15 | 5 |
| 16 | 4-5 |
| 17 | 4 |

### Tenue à la flexion

Le test consiste à faire subir à une éprouvette de cuir une série de flexions sur un appareil de type Flexomètre Bally. Après 20000 cycles, on ne note pas de différence entre les différentes compositions qui ne présentent aucune dégradation (microfendillement)

### EXEMPLE 18

On ajoute dans la fixation des agents de toucher selon la composition suivante :
Fixation M4

| | | |
|---|---|---|
| Astacin Novomatt GG (BASF) | 300 g | Dispersion polyurethane |
| Astacin mat HS (BASF) | 300 g | Dispersion polyurethane |
| Acrysol RM 1020 (Lanxess) | 15g | Epaississant |
| HMW 2220 (Dow Corning) | 30 g | Agent de toucher (60% ES) |
| Eau | 355 g | |
| Total | 1000 g | |

Le cuir utilisé est traité de la manière que précédemment (couche de fond n°1).
La quantité de réticulant utilisée est la suivante : 63,75 g.

### « Pot life »

Le test consiste à évaluer la durée pendant laquelle les fixations préparées sont utilisables sans dégradation des propriétés.

L'application est réalisée à différents temps par rapport à la préparation de la fixation.
T₀ : immédiatement après la réalisation du mélange
T₂ : h après la réalisation du mélange
T₄ : 4 h après la réalisation du mélange
T₈ : 8 h après la réalisation du mélange

La viscosité du mélange est également déterminée à l'aide de la coupe Ford 4.

Le test de tenue aux frottements humides est réalisé selon la méthode décrite ci-dessus, 6 jours après l'application et avec un nombre de cycle de 250 au lieu de 200.

| **Temps** | **Tenue aux frottements** | **Viscosité ( en s)** |
|---|---|---|
| T₀ | 5 | 20 |
| T₂ | 5 | 20 |
| T₄ | 5 | 20 |
| T₈ | 5 | 20 |

Les résultats montrent que les performances restent inchangées jusqu'a huit heures après le mélange des composés de la fixation.

### EXEMPLES 19 à 22

Pour l'obtention de propriétés optimales, une quantité de réticulant est introduite dans le fond n°2 suivant (20% de matière active par rapport à l'extrait sec du fond).

### Fonds n°2

| | | |
|---|---|---|
| Bayderm 51 UD (Lanxess) | 150 g | Dispersion polyurethane |
| Bayderm DLV (Lanxess) | 100 g | Dispersion polyurethane |
| Primal SB 150 (Rohm & Haas) | 150 g | Liant acrylique |
| Pigment Lepton Noir (BASF) | 100 g | Pigment |
| Euderm mat SN 01 (Lanxess) | 100 g | Agent mattant |
| Eau | 400 g | |
| Total | 1000 g | |

Le réticulant utilisé dans le fond est le même que celui incorporé dans chaque fixation. La comparaison est réalisée avec un système de référence selon la formule suivante :

### Fixation M5 (semi mate)

| | | |
|---|---|---|
| Astacin Novomatt GG (BASF) | 300 g | Dispersion polyurethane |
| Astacin mat HS (BASF) | 300 g | Dispersion polyurethane |
| Acrysol RM 1020 (Lanxess) | 15g | Epaississant |
| HMW 2220 (Dow Corning) | 60 g | Agent de toucher (60% ES) |
| Eau | 325 g | |
| Total | 1000 g | |

### Fixation M6 (mate)

| | | |
|---|---|---|
| Astacin Novomatt GG (BASF) | 350 g | Dispersion polyurethane |
| Astacin mat HS (BASF) | 250 g | Dispersion polyurethane |
| Acrysol RM 1020 (Lanxess) | 10g | Epaississant |
| HMW 2220 (Dow Corning) | 60 g | Agent de toucher (60% ES) |
| Eau | 330g | |
| Total | 1000 g | |

Le réticulant commercial utilisé est le produit de référence Astacin CN commercialisé par la société BASF ; c'est un polyisocyanate aliphatique dilué dans le carbonate de propylène à 70%.

Les quantités de réticulant utilisées sont les suivantes :

| **Exemples** | **Nature réticulant** | **Nature fixation** | **Quantité de réticulant (g)** |
|---|---|---|---|
| 19 (comparatif) | Astacin CN | M5 | 72,85 |
| 20 | Rhodocoat X- EZ-M 502 à 80% dans TME | M5 | 63,75 |
| 21 (comparatif) | Astacin CN | M6 | 72,85 |
| 22 | Rhodocoat X- EZ-M 502 à 80% dans TME | M6 | 63,75 |

### Tenue aux frottements humides

Les tests de tenue aux frottements humides sont réalisés comme précédemment décrit en utilisant différents agents agressifs:

| | Tenue aux frottements humides | | | |
|---|---|---|---|---|
| Exemples | 250 cycles eau | 500 cycles eau | 100 cycles essence C | 100 cycles alcool/eau 50/50 |
| 19 | 5 | 5 | 5 | 5 |
| 20 | 5 | 5 | 5 | 5 |
| 21 | 5 | 5 | 5 | 5 |
| 22 | 5 | 5 | 5 | 5 |

La tenue aux frottements humides est excellente dans tous les cas de figure.

### Mesure de brillance

La brillance est mesurée à l'aide d'un brillance mètre datacolor Mercury sous un angle de 85°
0 correspond à un objet très mat 100 à un objet très brillant.

| Exemples | Brillance |
|---|---|
| 19 | 7 |
| 20 | 6 |
| 21 | 5 |
| 22 | 5 |

Idéalement, la surface du cuir traitée doit être la plus mate possible. Dans la formulation semi-mate n °5, le réticulant objet de l'invention permet d'obtenir une valeur de brillance plus petite.

### Tenue à la flexion

Le test consiste à faire subir à un éprouvette de cuir une série de flexions sur un appareil de type Flexomètre Bally. Après 100000 cycles, on ne note pas de différence entre les différentes compositions qui ne présentent aucune dégradation (microfendillement)

## Revendications

1. Mélange à base de polyisocyanate, **caractérisé en ce qu'**il comprend :
- une composition polyisocyanate émulsifiable dans l'eau, comprenant en mélange au moins un polyisocyanate et au moins un additif hydrophile,
- au moins un solvant de formule (1) 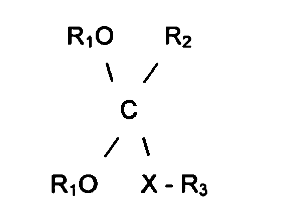
dans laquelle
R₁ représente un groupe alkyle en C₁-C₄, linéaire ou ramifié, les deux radicaux
R₁ pouvant être identiques ou différents et pouvant aussi être reliés;
R₂ représente H ou un groupe alkyle en C₁-C₄, linéaire ou ramifié;
X représente un radical alkyle divalent, linéaire ou ramifié, comprenant de 1 à 6 atomes de carbone, X pouvant représenter aussi une simple liaison covalente;
R₃ représente H, C(OR₁)₂R₂, C(O)OR₁, OC(O)R₂, OC(O)OR₁.

2. Mélange selon la revendication 1, **caractérisé en ce que** le solvant contient au plus 20 atomes de carbone et **en ce qu'**il présente un point de fusion d'au plus 0°C et un point d'ébullition d'au plus 350°C.

3. Mélange selon la revendication 1 ou 2, **caractérisé en ce que** le solvant répond à la formule (1) dans laquelle R₂ représente H ou CH₃, X est une liaison covalente et R₃ représente CH₃, -(CH)(OR₁)₂, -C(=O)(OR₁).

4. Mélange selon la revendication 1, **caractérisé en ce que** l'additif hydrophile présente une fonction anionique et un fragment de chaîne polyéthylène glycol d'au moins une, de préférence d'au moins 5 unités éthylènyloxyles.

5. Mélange précurseur, **caractérisé en ce qu'**il comprend :
- une composition polyisocyanate;
- au moins un solvant de formule (1) précitée.

6. Mélange selon l'une des revendications précédentes, **caractérisé en ce qu'**il comprend un solvant de formule (1) dans laquelle les groupes R₁ sont des radicaux méthyle ou éthyle, X est une liaison covalente et R₂ représente l'hydrogène.

7. Mélange selon la revendication 6, **caractérisé en ce qu'**il comprend au moins un solvant qui est choisi parmi le 1,1,2,2-tétraéthoxy éthane, le 1,1,2,2-tétraméthoxy éthane, le 2,2-diméthoxy acétate de méthyle, le 2,2-diéthoxy acétate d'éthyle.

8. Mélange selon l'une des revendications précédentes, **caractérisé en ce que** le polyisocyanate est choisi parmi les produits d'homo- ou d'hétéro-condensation d'alcoylène diisocyanate, comprenant notamment des produits du type "biuret" et du type "trimères", comportant notamment des fonctions urée, uréthane, allophanate, ester, amide, acylurée, isocyanurate, oxadiazinetrione, immino-dimère, immino-trimère (imminotriazadione), immino-oxadiazinedione (trimère asymétrique), diazétidinedione (dimère), et parmi les mélanges en contenant.

9. Mélange selon la revendication 8, **caractérisé en ce que** le polyisocyanate provient d'homo- ou d'hétéro-condensation des isocyanates aliphatiques, (cyclo- ou aryl-) aliphatiques monomères suivants :
- 1,6-hexaméthylène di-isocyanate (HDI),
- 1,12-dodécane di-isocyanate,
- cyclobutane-1,3-di-isocyanate,
- cyclohexane-1,3 et/ou 1,4-di-isocyanate,
- 1-isocyanato-3,3,5-triméthyl-5-diisocyanatométhylcyclohexane (isophorone di-isocyanate, IPDI),
- les isocyanatométhyloctylènedi-isocyanate (TTI),
- 2,4 et/ou 2,6-hexahydrotoluylène di-isocyanate (H₆TDI),
- hexahydro-1,3 et/ou 1,4-phénylène di-isocyanate,
- perhydro 2,4' et/ou 4,4'-diphénylméthane di-isocyanate (H₁₂MDI) , et en général - les précurseurs aromatiques aminés ou les carbamates perhydrogénés,
- les bis-isocyanatométhylcyclohexane (notamment 1,3 et 1,4) (BIC),
- les bis-isocyanatométhylnorbornane (NBDI),
- 2-méthylpentaméthylène di-isocyanate (MPDI),
- les tétraméthylxylilène di-isocyanate (TMXDI),
- le lysine di-isocyanate ainsi que les esters de la lysine di- ou tri-isocyanate (LDI ou LTI),
- le 2,4- et/ou le 2,6-toluylène di-isocyanate,
- le diphénylméthane-2,4' et/ou 4,4'-di-isocyanate (MDI),
- le 1,3- et/ou le 1,4-phénylène di-isocyanate,
- le triphénylméthane-4,4',4"-triisocyanate, et
- les oligomères du MDI, ou TDI.

10. Mélange selon la revendication 9, **caractérisé en ce que** le polyisocyanate est le produit de l'homocondensation des isocyanates choisis parmi le HDI et l'IPDI ou provient d'un mélange de ces produits d'homocondensation.

11. Emulsion aqueuse, **caractérisée en ce qu'**elle est obtenue par mise en émulsion dans l'eau du mélange selon l'une des revendications précédentes, mélange comprenant une composition polyisocyanate émulsifiable dans l'eau et au moins un solvant de formule (1) précitée, cette émulsion comprenant en outre au moins un composé porteur d'au moins une fonction à hydrogène mobile choisie parmi les fonctions hydroxyles primaires ou secondaires, phénols, amines primaires, et/ou secondaires, carboxyliques et fonction thiol ou un composé contenant des fonctions précurseurs susceptibles de libérer des fonctions hydroxyles.

12. Procédé de fabrication d'un revêtement sur un substrat, **caractérisé en ce qu'**on utilise une émulsion selon la revendication 11.

13. Procédé selon la revendication 12, **caractérisé en ce que** le substrat est un matériau choisi parmi le bois, les métaux, les ciments, les matériaux plastiques, les textiles, le cuir.

14. Procédé selon la revendication 12, **caractérisé en ce que** le revêtement est un revêtement à propriétés d'adhésif.

## Claims

1. Polyisocyanate-based mixture, **characterised in that** it comprises:
- a polyisocyanate composition emulsifiable in water, comprising, in admixture, at least one polyisocyanate and at least one hydrophilic additive;
- at least one solvent of formula (1) 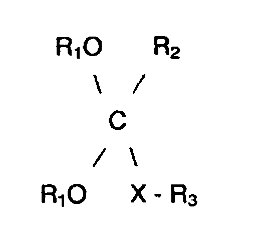
in which
R₁ represents a linear or branched C₁-C₄-alkyl group, it being possible for the two radicals R₁ to be identical or different and also to be linked;
R₂ represents H or a linear or branched C₁-C₄-alkyl group;
X represents a linear or branched, divalent alkyl radical containing from 1 to 6 carbon atoms, it being possible for X also to represent a single covalent bond;
R₃ represents H, C(OR₁)₂R₂, C(O)OR₁, OC(O)R₂, OC(O)OR₁.

2. Mixture according to claim 1, **characterised in that** the solvent contains not more than 20 carbon atoms, and **in that** it has a melting point not exceeding 0°C and a boiling point not exceeding 350°C.

3. Mixture according to claim 1 or 2, **characterised in that** the solvent corresponds to formula (1) in which R₂ represents H or CH₃, X is a covalent bond and R₃ represents CH₃, -(CH)(OR₁)₂, -C(=O)(OR₁).

4. Mixture according to claim 1, **characterised in that** the hydrophilic additive has an anionic functional group and a polyethylene glycol chain fragment having at least one, preferably at least 5, ethylenyloxyl unit(s).

5. Precursor mixture, **characterised in that** it comprises:
- a polyisocyanate composition;'
- at least one solvent of formula (1) mentioned above.

6. Mixture according to any one of the preceding claims, **characterised in that** it comprises a solvent of formula (1) in which the groups R₁ are methyl or ethyl radicals, X is a covalent bond and R₂ represents hydrogen.

7. Mixture according to claim 6, **characterised in that** it comprises at least one solvent selected from 1,1,2,2-tetraethoxyethane, 1,1,2,2-tetramethoxyethane, methyl 2,2-dimethoxyacetate and ethyl 2,2-diethoxyacetate.

8. Mixture according to any one of the preceding claims, **characterised in that** the polyisocyanate is selected from the homo- or hetero-condensation products of alkylene diisocyanate, especially comprising products of the "biuret" type and of the "trimer" type, especially comprising urea, urethane, allophanate, ester, amide, acylurea, isocyanurate, oxadiazinetrione, imino-dimer, imino-trimer (iminotriazinedione), imino-oxadiazinedione (asymmetric trimer), diazetidinedione (dimer) functional groups, and from the mixtures containing them.

9. Mixture according to claim 8, **characterised in that** the polyisocyanate is obtained from the homo- or hetero-condensation of the following monomeric aliphatic, (cyclo- or aryl-)aliphatic isocyanates:
- 1,6-hexamethylene diisocyanate (HDI),
- 1,12-dodecane diisocyanate,
- cyclobutane-1,3-diisocyanate,
- cyclohexane-1,3- and/or -1,4-diisocyanate,
- 1-isocyanato-3,3,5-trimethyl-5-diisocyanatomethylcyclohexane (isophorone diisocyanate, IPDI),
- the isocyanatomethyloctylene diisocyanates (TTI),
- 2,4- and/or 2,6-hexahydrotoluylene diisocyanate (H₆TDI),
- hexahydro-1,3- and/or -1,4-phenylene diisocyanate,
- perhydro-2,4'- and/or -4,4'-diphenylmethane diisocyanate (H₁₂MDI) and, generally, the aminated aromatic precursors or the perhydrogenated carbamates,
- the bis-isocyanatomethylcyclohexanes (especially 1,3 and 1,4) (BIC),
- the bis-isocyanatomethylnorbornanes (NBDI),
- 2-methylpentamethylene diisocyanate (MPDI),
- the tetramethylxylylene diisocyanates (TMXDI),
- lysine diisocyanate and the esters of lysine di- or tri-isocyanate (LDI or LTI),
- 2,4- and/or 2,6-toluylene diisocyanate,
- diphenylmethane 2,4'- and/or 4,4'-diisocyanate (MDI),
- 1,3- and/or 1,4-phenylene diisocyanate,
- triphenylmethane-4,4',4"-triisocyanate, and
- the oligomers of MDI or TDI.

10. Mixture according to claim 9, **characterised in that** the polyisocyanate is the product of the homocondensation of isocyanates selected from HDI and IPDI or is obtained from a mixture of those homocondensation products.

11. Aqueous emulsion, **characterised in that** it is obtained by making the mixture according to any one of the preceding claims into an emulsion in water, the mixture comprising a polyisocyanate composition that is emulsifiable in water and at least one solvent of formula (1) mentioned above, the emulsion further comprising at least one compound carrying at least one functional group having mobile hydrogen selected from the primary or secondary hydroxyl functional groups, phenols, primary and/or secondary amines, carboxylic functional groups, thiol functional group or a compound containing precursor functional groups capable of liberating hydroxyl functional groups.

12. Method of producing a coating on a substrate, **characterised in that** an emulsion according to claim 11 is used.

13. Method according to claim 12, **characterised in that** the substrate is a material selected from wood, metals, cements, plastics materials, textiles, leather.

14. Method according to claim 12, **characterised in that** the coating is a coating having adhesive properties.

## Patentansprüche

1. Mischung auf der Basis von Polyisocyanat, **dadurch gekennzeichnet, dass** sie Folgendes enthält:
- eine in Wasser emulgierbare Polyisocyanat-Verbindung, die in Mischung zumindest ein Polyisocyanat und zumindest ein hydrophiles Additiv enthält,
- zumindest ein Lösungsmittel mit der Formel (1) 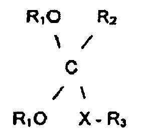
wobei gilt:
R₁ steht für eine lineare oder verzweigte C₁-C₄-Alkylgruppe, wobei die beiden Reste R₁ identisch oder verschieden und außerdem verbunden sein können;
R₂ steht für H oder eine lineare oder verzweigte C₁-C₄-Alkylgruppe;
X steht für einen bivalenten, linearen oder verzweigten Alkylrest mit 1 bis 6 Kohlenstoffatomen, wobei X auch für eine einfache kovalente Bindung stehen kann;
R₃ steht für H, C(OR₁)₂R₂. C(O)OR₁, OC(O)R₂, OC(O)OR₁.

2. Mischung nach Anspruch 1, **dadurch gekennzeichnet, dass** das Lösungsmittel höchstens 20 Kohlenstoffatome enthält und dass es einen Schmelzpunkt von höchstens 0°C und einen Siedepunkt von höchstens 350°C aufweist.

3. Mischung nach Anspruch 1 oder 2, **dadurch gekennzeichnet, dass** das Lösungsmittel der Formel (1) entspricht, wobei R₂ für H oder CH₃ steht, X eine kovalente Bindung ist und R₃ für CH₃, -(CH)(OR₁)₂,-C(=O)(OR₁) steht.

4. Mischung nach Anspruch 1, **dadurch gekennzeichnet, dass** das hydrophile Additiv eine anionische Funktion und ein Polyethylenglykol-Kettenfragment mit wenigstens einer, vorzugsweise wenigstens 5 Ethylenyloxyl-Einheiten aufweist.

5. Vorstufenmischung, **dadurch gekennzeichnet, dass** sie Folgendes enthält:
- eine Polyisocyanat-Verbindung;
- wenigstens ein Lösungsmittel mit der vorgenannten Formel (1).

6. Mischung nach einem der vorangehenden Ansprüche, **dadurch gekennzeichnet, dass** sie ein Lösungsmittel mit der Formel (1) enthält, wobei die Gruppen R₁ Methyl- oder Ethylreste sind, X eine kovalente Bindung ist und R₂ für Wasserstoff steht.

7. Mischung nach Anspruch 6, **dadurch gekennzeichnet, dass** sie zumindest ein Lösungsmittel enthält, das aus 1,1,2,2-Tetraethoxyethan, 1,1,2,2-Tetramethoxyethan, Methyl-2,2-dimethoxyacetat, Ethyl-2,2-diethoxyacetat ausgewählt wird.

8. Mischung nach einem der vorangehenden Ansprüche,**dadurch gekennzeichnet, dass** das Polyisocyanat aus den Produkten der Homo- oder Heterokondensation von Alkylendiisocyanat, insbesondere solchen vom Typ "Biuret" und vom Typ "Trimere", die insbesondere Harnstoff-, Urethan-, Allophanat-, Ester-, Amid-, Acylharnstoff-, Isocyanurat-, Oxadiazinetrion-, Iminodimer-, Iminotrimer- (Iminotriazadion), Iminooxadiazindion- (asymmetrisches Trimer), Diazetidindion- (Dimer) Funktionen umfassen, und aus den diese enthaltenden Mischungen ausgewählt wird.

9. Mischung nach Anspruch 8, **dadurch gekennzeichnet, dass** das Polyisocyanat aus der Homo- oder Heterokondensation der folgenden aliphatischen, (cyclo- oder aryl-) aliphatischen monomeren Isocynanate stammt:
- 1,6-Hexamethylendiisocyanat (HDI),
- 1,12-Dodecandiisocyanat,
- Cyclobutan-1,3-diisocyanat,
- Cyclohexan-1,3- und/oder 1,4-diisocyanat,
- 1-isocyanato-3,3,5-trimethyl-5-diisocyanatomethylcyclohexan (Isophorondiisocyanat, IPDI),
- Isocyanatomethyloctylendiisocyanat (TTI),
- 2,4- und/oder 2,6-hexahydrotoluylendiisocyanat (H₆TDI),
- Hexahydro-1,3- und/oder 1,4-phenylendiisocyanat,
- Perhydro-2,4'- und/oder 4-4'-diphenylmethandiisocyanat (H₁₂MDI) und generell aminierte aromatische Vorstufen oder perhydrierte Carbamate,
- Bis-isocyanatomethylcyclohexan (insbesondere 1,3 und 1,4) (BIC),
- Bis-isocyanatomethylnorbornan (NBDI),
- 2-Methylpentamethylendiisocyanat (MPDI),
- Tetramethylxylylendiisocyanat (TMXDI),
- Lysindiisocyanat sowie Ester von Lysindi- oder -triisocyanat (LDI oder LTI),
- 2,4- und/oder 2,6-Toluylendiisocyanat,
- Diphenylmethan-2,4'- und/oder 4,4'-diisocyanat (MDI),
- 1,3- und/oder 1,4-Phenylendiisocyanat,
- Triphenylmethan-4,4',4"-triisocyanat und
- Oligomere von MDI oder TDI.

10. Mischung nach Anspruch 9, **dadurch gekennzeichnet, dass** das Polyisocyanat das Produkt der Homokondensation der aus HDI und IPDI ausgewählten Isocyanate ist oder aus einer Mischung dieser Homokondensationsprodukte stammt.

11. Wässrige Emulsion, **dadurch gekennzeichnet, dass** sie durch das Emulgieren der Mischung nach einem der vorangehenden Ansprüche in Wasser hergestellt wird, wobei die Mischung eine in Wasser emulgierbare Polyisocyanat-Verbindung und zumindest ein Lösungsmittel mit der vorgenannten Formel (1) enthält, wobei diese Emulsion außerdem zumindest eine Verbindung enthält, die Träger zumindest einer Funktion mit beweglichem Wasserstoff ist, die aus den primären oder sekundären Hydroxyl-, Phenol-, primären und/oder sekundären Amin-, Carboxylfunktionen und Thiolfunktion ausgewählt wird, oder eine Verbindung, die Vorstufenfunktionen enthält, die Hydroxylfunktionen freisetzen können.

12. Verfahren zur Herstellung einer Beschichtung auf einem Substrat, **dadurch gekennzeichnet , dass** eine Emulsion nach Anspruch 11 verwendet wird.

13. Verfahren nach Anspruch 12, **dadurch gekennzeichnet, dass** das Substrat ein Werkstoff ist, der aus Holz, Metall, Zement, Kunststoff, Textilien oder Leder ausgewählt wird.

14. Verfahren nach Anspruch 12, **dadurch gekennzeichnet, dass** die Beschichtung eine Beschichtung mit Klebstoffeigenschaften ist.
